# EUROPEAN PATENT SPECIFICATION

(11) **EP 1 016 557 B1**
(45) Date of publication and mention of the grant of the patent: **13.11.2002**
(21) Application number: 99830757.3
(22) Date of filing: 06.12.1999
(51) Int. Cl.: B60H 1/32, F25B 39/04, F25B 41/06

(54) **A condenser for air conditioning systems for vehicles, having an integrated expansion device**
Kondensator für Klimaanlage für Fahrzeuge mit integrierter Expansionsvorrichtung
Condenseur pour système de conditionnement d'air pour véhicules avec un dispositif d'expansion intégré

(30) Priority: 29.12.1998 IT TO981094
(43) Date of publication of application: 05.07.2000
(73) Proprietor: DENSO THERMAL SYSTEMS S.p.A., 10046 Poirino (Torino) (IT)
(72) Inventor: Pennisi, Paolo, 10126 Torino (IT)
(74) Representative: Marchitelli, Mauro

(56) References cited:
- DE-A- 19 800 739
- GB-A- 238 260
- US-A- 3 881 546
- US-A- 4 375 228

## Description

The present invention relates to a condenser for air conditioning systems for vehicles.

Air conditioning systems for vehicles are essentially formed by a closed circuit in which a compressor, a condenser, an expansion device and a cooler are arranged in series to each other. The expansion device can be formed by an expansion valve for instance of the type commonly known as variable orifice valve (VOV) or, in the most economical versions, can be formed by a device usually called calibrated orifice, having a body provided with an o-ring which divides a high pressure section from a low pressure section and in which a small tube is arranged having a calibrated aperture which puts in communication with each other the high pressure and low pressure sections.

In present solutions, the expansion device is inserted into a branch pipe extending between the condenser and the cooler. A threaded connection permits removal of the expansion device for cleaning, maintenance or replacement operations.

The object of the present invention is to reduce the number of connection points in an air conditioning system for vehicles and to simplify the lay-out of the branch pipes in the engine compartment.

According to the present invention, this object is achieved by a condenser having the features forming the subject of the main claim.

Characteristics and advantages of the condenser according to the present invention will become clear in the course of the detailed description which follows, given purely by way of non-limiting example, with reference to the attached drawings, in which:
- figures 1 and 2 are schematic views of two embodiments of a condenser according to the present invention,
- figure 3 is a cross-section in greater scale taken along the line III-III of figures 1 or 2,
- figure 4 is a schematic view of a second embodiment of a condenser according to the invention,
- figure 5 is a cross-section in a greater scale of the part indicated by the arrow V in figure 4, and
- figure 6 is a partially exploded perspective view of the part indicated by the arrow VI in figure 5.

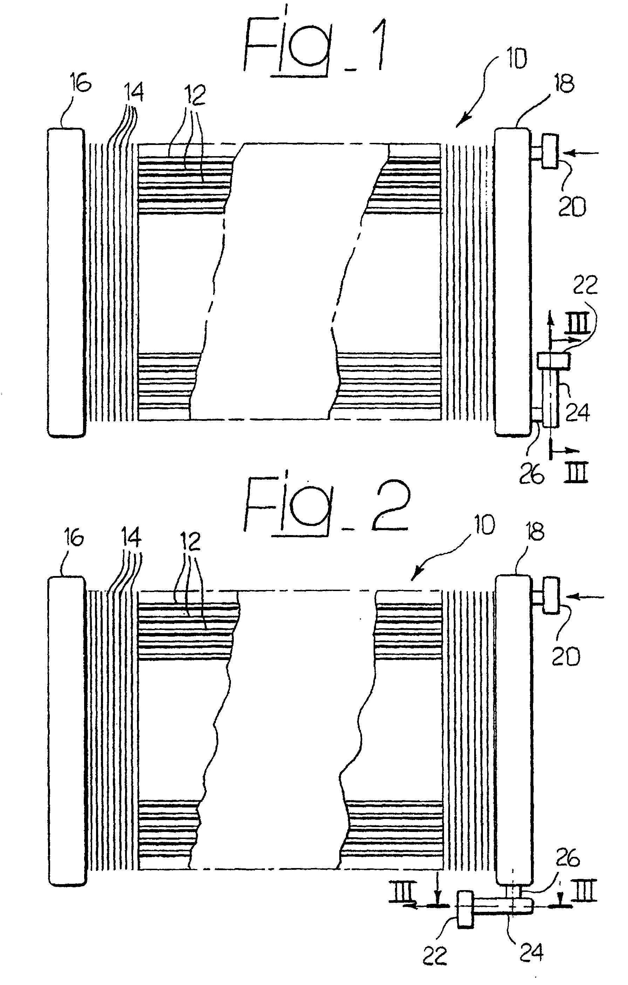

With reference to figures 1 and 2, the numeral reference 10 indicates a condenser for air conditioning systems for vehicles. The condenser 10 comprises, in a way per se known, a plurality of tubes 12 fixed to a pack of fins 14. The ends of the tubes 12 are connected to a pair of distributors 16, 18 parallel to each other. The distributor 18 is provided with an inlet fitting 20 and with an outlet fitting 22, intended to be connected to respective pipes (not shown).

In accordance with a first embodiment of the present invention, the outlet fitting 22 is connected to the end of a tubular element 25 housing an expansion device adapted to reduce the pressure of the coolant fluid coming from the condenser 10. The tubular element 24 is provided with a tubular projection 26 which is fixed by braze-welding to the distributor 18. The tubular portion 26 can be fixed either to the lateral wall of the distributor 18 in correspondence with one of its ends (figure 1) or to a flat bottom wall of the distributor (figure 2).

As shown in greater detail in figure 3, a first end of the tubular element 24 communicates with an outlet aperture 28 of the fitting 22. In a way per se known, the fitting 22 has a threaded hole 30 intended to be engaged by a screw (not shown) which fixes the branch pipe to the fitting 22. A second end 31 of the tubular element 24 is closed by a removable plug 22 having sealing means of a traditional type (not shown) formed for instance by o-rings. The removable plug 22 can be fixed to the tubular element 24 either by means of a threaded joint or by a metal split ring. An expansion device 34 which in the example shown in the figures is formed by a calibrated orifice device, is housed inside the tubular element 24. The device 34 is per se known and comprises a central body 36 having an o-ring 38 which establishes a sealing contact with the inner wall of the tubular element 24. The o-ring 38 divides the device 34 into a high pressure section 40 and a low pressure section 42. The two sections 40, 42 are connected to each other by a small tube (not shown) having a calibrated inner diameter.

In operation, the coolant fluid exits from the distributor 18 in a liquid state and expands passing through the expansion device 34. The fluid which comes out of the outlet fitting 22 is therefore fully in a vapour state and is directly sent to a cooler (not shown).

This solutions eliminates a threaded joint on the branch pipe between the condenser and the cooler. In addition, the branch pipe can be adapted more closely to the engine lay-out because the branch pipe does not need a straight portion for housing the expansion device.

The expansion device 34 can not come out from the hole 28 under the action of the pressure of the fluid because the body 36 has a diameter slightly greater than the diameter of the outlet hole 38. For carrying out either maintenance or replacement operation, the expansion device 34 can be removed through the aperture 31 after having removed the plug 32.

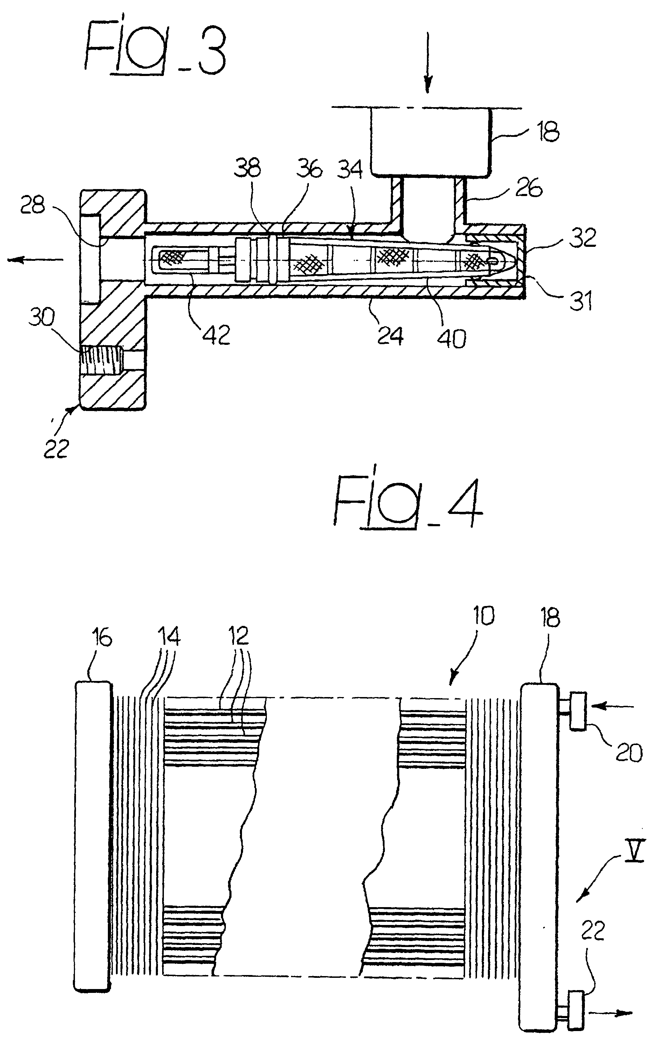

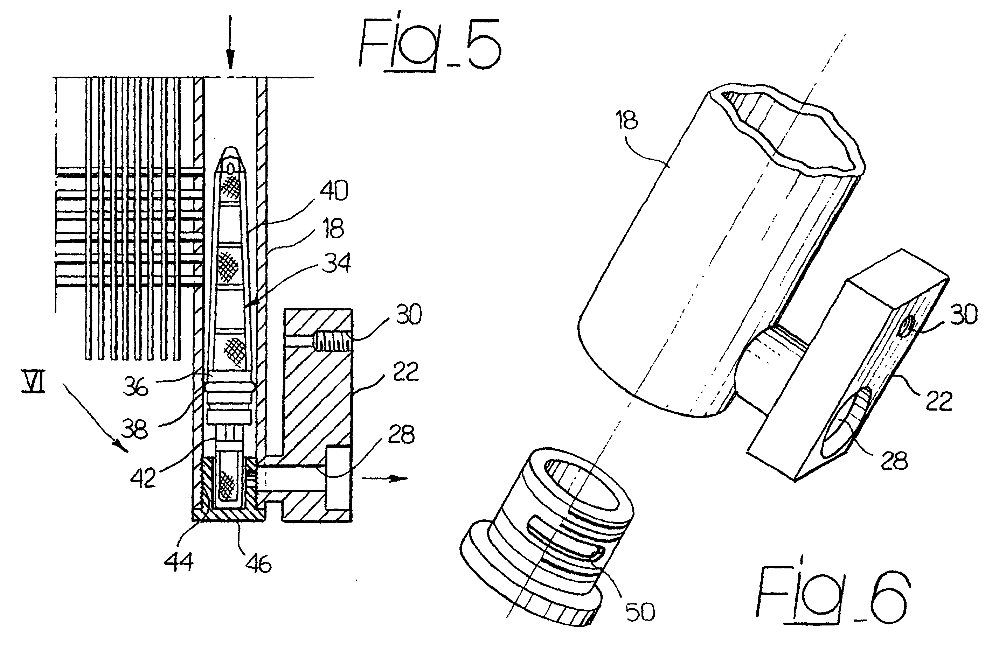

In some cases, the presence of the tubular element 24 outside the distributor 18 could cause problems for the installation of the condenser on the vehicle. In this case, the embodiment shown in figures 4, 5 and 6 could be used, in which the elements corresponding to the ones previously disclosed are indicated by the same numeral references. In this case, the outlet fitting 22 is directly connected to the distributor 18, in a way similar to the traditional solutions. As shown in figure 5, in this second embodiment the expansion device 34 is housed in the distributor 18, in correspondence with the outlet fitting 22. The distributor 18 has an open end 44 for the introduction and the removal of the expansion device 34. The end 44 of the distributor 18 is closed by a removable plug 46 having, for instance, a threaded section. The section of the plug 46 inserted inside the distributor 18 has an elongated hole 50 which puts the internal part of the distributor 18 in communication with the outlet hole 28. When the plug 46 is fixed to the distributor 18 by a threaded joint, it is necessary that the elongated hole is positioned with precision, so that it is placed in correspondence with the outlet hole 28 when the plug 46 is completely tightened. The elongated shape of the hole 50 enables the compensation of possible positioning errors.

## Claims

1. A condenser for air conditioning systems for vehicles, comprising a plurality of tubes (12) fixed to a pack of fins (14), the ends of the tubes being connected to a pair of distributors (16, 18), the condenser having an outlet fitting (22) for the passage of a flow of coolant fluid, **characterized in that** the condenser comprises an expansion device (34) placed in correspondence with said outlet fitting (22), for reducing the pressure of the coolant fluid coming out of the condenser, the expansion device (34) being housed into a volume placed between said outlet fitting (22) and the respective distributor (18).

2. A condenser according to claim 1, **characterized in that** the outlet fitting (22) is connected to the distributor (18) through a tubular element (24) in which said expansion device (34) is housed.

3. A condenser according to claim 1, **characterized in that** said expansion device (34) is housed inside an end portion of the distributor (18), to which said outlet fitting (22) is connected.

4. A condenser according to claim 2 or claim 3, **characterized in that** said expansion device (34) comprises a sealing element (38) contacting the internal surface of either said tubular element (24) or said distributor (18), said sealing element (38) dividing from each other an high pressure section (40) and a low pressure section (42) communicating with each other by means of a calibrated aperture.

5. A condenser according to claim 2 or claim 3, **characterized in that** said expansion device (34) can be removed through an aperture (31; 44) formed at one end of either said tubular element (24) or said distributor (18) and closed by a removable plug (32; 46).

## Patentansprüche

1. Kondensator für Klimaanlage für Fahrzeuge, umfassend eine Vielzahl von Rohren (12), die an einem Rippenpaket (14) befestigt sind, wobei die Enden der Rohre an ein Paar Verteiler (16, 18) angeschlossen sind und der Kondensator einen Auslassanschluss (22) zum Durchfluss eines Kühlflüssigkeitsstroms aufweist,
**dadurch gekennzeichnet, dass**
der Kondensator eine Expansionsvorrichtung (34) umfasst, die in Übereinstimmung mit dem Auslassanschluss (22) angeordnet ist, um den Druck der aus dem Kondensator herauskommenden Kühlflüssigkeit zu reduzieren, wobei-die Expansionsvorrichtung (34) in einem Bauraum untergebracht ist, der zwischen dem Auslassanschluss (22) und dem jeweiligen Verteiler (18) angeordnet ist.

2. Kondensator gemäß Anspruch 1, **dadurch gekennzeichnet, dass** der Auslassanschluss (22) an den Verteiler (18) über ein rohrförmiges Element (24) angeschlossen ist, in dem die Expansionsvorrichtung (34) untergebracht ist.

3. Kondensator gemäß Anspruch 1, **dadurch gekennzeichnet, dass** die Expansionsvorrichtung (34) im Innern eines Endabschnitts des Verteilers (18) untergebracht, ist, an den der Auslassanschluss (22) angeschlossen ist.

4. Kondensator gemäß Anspruch 2 oder Anspruch 3, **dadurch gekennzeichnet, dass** die Expansionsvorrichtung (34) ein Dichtelement (38) umfasst, das mit der Innenseite entweder des rohrförmigen Elementes (24) oder des Verteilers (18) in Kontakt ist, wobei das Dichtelement (38) eine Abteilung (40) mit hohem Druck und eine Abteilung (42) mit niedrigem Druck voneinander trennt, die mittels einer kalibrierten Öffnung miteinander in Verbindung stehen.

5. Kondensator gemäß Anspruch 2 oder Anspruch 3, **dadurch gekennzeichnet, dass** die Expansionsvorrichtung (34) durch eine Öffnung (31; 44) entnommen werden kann, die an einem Ende entweder des rohrförmigen Elementes (24) oder des Verteilers (18) ausgebildet und durch einen herausziehbaren Stopfen (32; 46) verschlossen ist.

## Revendications

1. Condenseur pour des systèmes de conditionnement d'air pour véhicules comprenant une pluralité de tubes (12) fixés à un bloc d'ailettes (14), les extrémités des tubes étant raccordées à une paire de distributeurs (16/18), le condenseur possédant un raccord de sortie (22) pour le passage d'un écoulement de fluide de refroidissement, **caractérisé en ce que** le condenseur comprend un dispositif d'expansion (34) disposé à correspondre avec ledit raccord de sortie (22), pour réduire la pression du fluide de refroidissement sortant du condenseur, le dispositif d'expansion (34) étant logé dans un volume disposé entre ledit raccord de sortie (22) et le distributeur respectif (18).

2. Condenseur selon la revendication 1, **caractérisé en ce que** le raccord de sortie (22) est raccordé au distributeur (18) au moyen d'un élément tubulaire (24), dans lequel ledit dispositif d'expansion (34) est logé.

3. Condenseur selon la revendication 1, **caractérisé en ce que** ledit dispositif d'expansion (34) est logé à l'intérieur d'une partie d'extrémité du distributeur (18), à laquelle est raccordé ledit raccord de sortie (22).

4. Condenseur selon la revendication 2 ou la revendication 3, **caractérisé en ce que** ledit dispositif d'expansion (34) comprend un élément d'étanchéité (38) qui est en contact avec la surface interne dudit élément tubulaire (21) ou dudit distributeur (18), ledit élément d'étanchéité (38) séparant l'une de l'autre une section à haute pression (40) et une section à basse pression (42), qui communiquent entre elles au moyen d'une ouverture calibrée.

5. Condenseur selon la revendication 2 ou la revendication 3, **caractérisé en ce que** ledit dispositif d'expansion (34) peut être retiré par une ouverture (31;44) formée dans une extrémité dudit élément tubulaire (24) ou dudit distributeur (18) et fermée par un bouchon amovible (32;46).
